# EUROPÄISCHE PATENTSCHRIFT

(11) **EP 2 675 609 B1**
(45) Veröffentlichungstag und Bekanntmachung des Hinweises auf die Patenterteilung: **02.11.2016**
(21) Anmeldenummer: 12714631.4
(22) Anmeldetag: 02.04.2012
(51) Int. Cl.: B29C 67/00

(54) **VERFAHREN ZUM SELEKTIVEN LASERSCHMELZEN UND ANLAGE ZUR DURCHFÜHRUNG DIESES VERFAHRENS**
PROCESS FOR SELECTIVE LASER MELTING AND SYSTEM FOR CARRYING OUT SAID PROCESS
PROCÉDÉ DE FUSION LASER SÉLECTIVE ET SYSTÈME PERMETTANT DE METTRE EN UVRE UN TEL PROCÉDÉ

(30) Priorität: 08.04.2011 DE 102011007067
(43) Veröffentlichungstag der Anmeldung: 25.12.2013
(73) Patentinhaber: Siemens Aktiengesellschaft, 80333 München (DE)
(72) Erfinder: KÜSTERS, Yves, 10829 Berlin (DE); LUPP, Friedrich, 81545 München (DE); REHME, Olaf, 20148 Hamburg (DE); SCHÄFER, Martin, 10557 Berlin (DE)
(86) Internationale Anmeldenummer: PCT/EP2012/055941
(87) Internationale Veröffentlichungsnummer: WO 2012/136615

(56) Entgegenhaltungen:
- EP-A1- 1 405 714
- EP-A1- 2 335 848
- WO-A1-01/91993
- JP-A- 2004 188 604
- JP-A- 2006 044 017
- US-A1- 2003 003 179
- US-A1- 2006 192 322

## Beschreibung

Die Erfindung betrifft ein Verfahren zum Erzeugen eines Bauteils durch selektives Laserschmelzen, bei dem ein Laserstrahl auf den gerade zu erzeugenden Bereich des in Herstellung befindlichen Bauteils gerichtet wird und dort lokal Partikel des Bauteilwerkstoffs aufgeschmolzen werden. Außerdem betrifft die Erfindung eine Anlage zum selektiven Laserschmelzen, die eine Bauplattform für ein zu erzeugendes Werkstück aufweist und einen Laser, der sich auf die Bauplattform richten lässt.

Ein Verfahren der eingangs angegebenen Art sowie eine zur Durchführung dieses Verfahrens geeignete Anlage sind beispielsweise aus der US 7,601,422 B2 allgemein bekannt. Die Anlage weist eine Bauplattform auf, die mit einem Pulver des Bauteilwerkstoffes schichtweise beschickt werden kann. Ein Laser wird über einen Spiegel auf die jeweils gebildete Pulveroberfläche gerichtet, wo die Partikel des Pulvers lokal aufgeschmolzen werden können. In der Anlage werden Daten zur Geometrie des herzustellenden Bauteils verarbeitet, so dass dieses lagenweise im Pulverbett auf der Bauplattform entsteht. Durch die Abtastung der Oberfläche des Pulverbettes mit dem Laserstrahl entsteht prinzipbedingt bei dem Bauteil eine rasterartige bzw. stufige Oberfläche. Die Oberflächengüte kann durch Einstellung der Parameter des Lasers beeinflusst werden, jedoch prinzipbedingt nicht vollständig ausgeglichen werden.

Gemäß der nachveröffentlichten EP 2 335 848 A1 ist beschrieben, dass der Laserstrahl für ein selektives Laserschmelzen durch Linsenanordnungen so geformt werden kann, dass sich ein quadratisches Intensitätsprofil ergibt. Dieses kann gleichzeitig vergleichmäßigt werden, indem die Bestrahlungsfläche aus neun rechtwinkeligen Teillaserstrahlen aufgebaut wird.

Weitere Verfahren zum Laserschmelzen sind in der EP 1 405 714 A1 und der US 2006/019322 A1 beschrieben. Diese Laserschmelzanlagen weisen Einrichtungen auf, mit denen der Durchmesser des Laserstrahls verändert werden kann. Dies wird beispielsweise dadurch bewerkstelligt, dass der Fokuspunkt des Laserstrahls verschoben wird. Damit hat der durch den Durchmesser des Laserstrahls bestimmte Belichtungsbereich jeweils eine unterschiedliche Fläche und Intensität. Der Durchmesser kann in Abhängigkeit des herzustellenden Bauteils in geeigneter Weise variiert werden.

Außerdem ist es aus der WO 01/91993 A1 für kunststoffverarbeitende additive Fertigungsverfahren bekannt, dass die Behandlungsfläche durch geeignete Fokussierung oder Blenden in der Intensität im Bereich der Behandlungsfläche angepasst werden kann. Dabei können auch Maßnahmen ergriffen werden, mit denen die Intensität des Lichts im Bereich der Behandlungsfläche vergleichmäßigt wird.

Die Aufgabe der Erfindung besteht darin, ein Verfahren zum Erzeugen eines Bauteils durch selektives Laserschmelzen bzw. eine Anlage, geeignet zum angegebenen Laserschmelzen, anzugeben, mit der sich die Oberflächengüte des hergestellten Bauteils im Vergleich zu herkömmlichen Verfahren verbessern lässt.

Diese Aufgabe wird mit dem in Anspruch 1 beanspruchten Verfahren und der in Anspruch 4 beanspruchten Anlage gelöst.

Ein Laserstrahl wird durch ein optisches Element derart geformt, insbesondere aufgeweitet, dass sich in zumindest einer Richtung quer zur Strahlpropagationsrichtung eine Vergleichmäßigung des Intensitätsprofils des Laserlichtes in dem gerade zu erzeugenden Bereich des in Herstellung befindlichen Bauteils ergibt, d.h. ein sogenanntes "Top-Hat-Profil" erzeugt wird. Hierzu ist zu bemerken, dass das Intensitätsprofil eines Laserstrahls an sich eine Intensitätsverteilung aufweist, die durch ein glockenförmiges Profil (Gaussche Verteilung) beschrieben werden kann. Dies bedeutet, dass das Intensitätsmaximum im Zentrum des Laserstrahls liegt und die Intensität zu den Rändern des Laserstrahls hin abnimmt. Hierdurch wird beim Aufschmelzen des Pulverbettes ein Temperaturmaximum in der Mitte des Laserspots auf der Oberfläche des Pulverbettes erreicht, wobei die Temperatur zum Rand hin abnimmt und am Rande nicht zum Aufschmelzen der Partikel ausreicht. Hierdurch werden insbesondere am Rande des aktuell herzustellenden Bauteilquerschnittes an der Oberfläche des Pulverbettes Probleme erzeugt. Der Laserspot muss nämlich am Rande des Querschnitts so lange verweilen, bis die Randpartikel des herzustellenden Bauteils aufgeschmolzen wurden. In der Nähe des Randes, nämlich dort, wo sich das Intensitätsmaximum des Laserstrahls befindet, ist zu diesem Zeitpunkt aber bereits ein zu hohes Maß an Energie zugeführt worden. Daher ist der Prozess insbesondere am Rande des Querschnitts schwer zu beherrschen, und die Gefahr, dass sich hierdurch die Oberflächengüte des Bauteils verschlechtert, ist groß.

Hier setzt die Erfindung an, indem durch die Formung des Laserstrahls eine Vergleichmäßigung des Intensitätsprofils hervorgerufen wird. Diese erfolgt insbesondere durch bekannte Strahlformungselemente d. h. dass sich das Maximum der Lichtintensität durch die Formung auf einen größeren Flächenbereich des Laserspots verteilt bei gleichzeitiger Verringerung des Intensitätsmaximums. Innerhalb dieses Bereiches wird dann eine gleichmäßig intensive Energiezufuhr in das Pulverbett bewirkt, wodurch ungewollte Temperaturspitzen im Schmelzbad vorteilhaft vermieden werden können.

Vorteilhaft wird die Strahlformung so ausgelegt, dass die Größe und Form des Bereiches während der Bearbeitung veränderbar ist. Somit kann eine Verkürzung der Prozessgeschwindigkeit erreicht werden ohne die Flexibilität bzgl. der möglichen Strukturgrößen zu verlieren. Insbesondere können durch ein Top-Hat-Profil auch kleinere Strukturen erzeugt werden wie mit einer glockenförmigen Intensitätsverteilung.

Zu bemerken ist, dass das erzeugte Bauteil Flächenanteile hat, die mehrere der einzeln erzeugten Bauteilschichten enthalten. In diesen Flächenbereichen lässt sich die Oberflächengüte insbesondere dadurch verbessern, dass die zwangsläufig auftretenden Stufen durch die erfindungsgemäße Verfahrensführung regelmäßiger ausgebildet werden, so dass hier das Optimum der Oberflächengüte (bei Verbleib einer gewissen Stufigkeit der Oberfläche) erreicht wird. Bei Oberflächenanteilen des Bauteils, die genau senkrecht zur Strahlrichtung des Laserstrahls liegen, lässt sich ebenfalls eine Verbesserung der Oberflächengüte erreichen. Dies ist dadurch möglich, dass durch die Vergleichmäßigung des Intensitätsprofils des Laserspots auf dem Pulverbett eine Überschneidung der durch den Laser auf der herzustellenden Querschnittsfläche des Bauteils abgefahrenen Bahnen geringer ausfallen kann und hierdurch beispielsweise ein mehrfaches Aufschmelzen der Oberfläche unterbunden wird.

Ein zusätzlicher Vorteil bei der erfindungsgemäßen Verfahrensführung entsteht auch dadurch, dass die Aufweitung der eingebrachten Strahlungsenergie auf einen größeren Flächenabschnitt des Laserspots auch die Ausbildung von Eigenspannungen im Bauteil verringert. Hierdurch können Nachbehandlungen des Bauteils zum Abbau von Spannungen (beispielsweise Wärmebehandlungen) vorteilhaft abgekürzt werden oder im Produktionsprozess sogar ganz entfallen.

Gemäß der Erfindung ist außerdem vorgesehen, dass der Laserstrahl durch ein diffraktives optisches Element geformt wird, welches über eine definierte Behandlungsfläche in dem zu erzeugenden Bereich die Vergleichmäßigung des Intensitätsprofils erzeugt. Diffraktive optische Elemente, auch als "Refractive Beam Shapers" bezeichnet, sind an sich bekannt und werden beispielsweise durch die Firma Newport angeboten.

Diffraktive optische Elemente haben bei ihrem Einsatz den Vorteil, dass sich über eine definierte Fläche ein weitgehend gleichmäßiges Intensitätsprofil einstellen lässt. Hierbei können flächenunterschiedliche Formen, wie beispielsweise quadratische oder runde Flächen, erzeugt werden.

Gemäß der Erfindung ist es einerseits möglich, dass eine Behandlungsfläche geschaffen wird, die näherungsweise rechteckig, insbesondere quadratisch, ist. Hierdurch lassen sich vorteilhaft insbesondere Bauteile gut herstellen, deren Querschnittsfläche gerade Kanten und insbesondere auch rechtwinklige Ecken aufweisen. Der aufgeweitete Laser kann mit einer der Seitenkanten der Behandlungsfläche direkt am Rand der herzustellenden Querschnittsfläche entlanggeführt werden. Hierbei entsteht im Randbereich des herzustellenden Querschnitts ein gleichmäßiger Energieeintrag, wodurch die Qualität des entstehenden Bauteils vorteilhaft weiter verbessert werden kann. Insbesondere in der Ecke des Querschnitts führt die Verwendung einer rechtwinkligen Behandlungsfläche dazu, dass diese bis in die Ecke hineingefahren werden kann und damit ein gleichmäßiger Energieeintrag im Bereich der Ecke gewährleistet werden kann. Es ist aber auch möglich, dass die Behandlungsfläche näherungsweise oval, insbesondere rund, ist. Mit einer Behandlungsfläche dieser Gestalt können insbesondere Querschnittsflächen des herzustellenden Bauteils erzeugt werden, die eine gekrümmte Außenkontur haben. Der Laser kann dann entlang der gekrümmten Außenkontur geführt werden und dabei tangential immer die Außenkontur berühren, unabhängig davon, welche Winkelstellung der zu erzeugende Teilbereich der Außenkontur in der Ebene des Pulverbettes gerade aufweist.

Wichtig für die Erfindung ist außerdem, dass je nach Gestalt der auszubildenden Querschnittsfläche zwischen einer rechteckigen, insbesondere quadratischen und einer ovalen, insbesondere runden Behandlungsfläche gewechselt werden kann. Dies ist möglich, weil unterschiedliche refraktive optische Elemente zum Einsatz kommen können, also diese ausgewechselt werden können. Je nach dem, welche Konturbereiche gerade zu fertigen sind, wird dann die besser geeignete Behandlungsfläche ausgewählt. Vorteilhaft ist es, wenn die Intensität des Laserlichtes innerhalb der Behandlungsfläche von einem vorgegebenen Sollwert um weniger als 10 %, bevorzugt weniger als 5 %, abweicht. Hierbei entsteht in dem besagten Bereich vorteilhaft eine sehr gleichmäßige Verteilung des Energieeintrags.

Mit der eingangs angegebenen Anlage wird die Aufgabe weiterhin dadurch gelöst, dass im Strahlengang des Lasers eine das Intensitätsprofil des Laserlichtes formende Optik angeordnet ist, wobei das erzeugte Intensitätsprofil im Bereich des auf der Bauplattform zu erzeugenden Bauteils liegt. Hierdurch kann sichergestellt werden, dass in dem Bereich, wo das Bauteil oberhalb der Bauplattform lagenweise hergestellt werden soll, die bereits erwähnte Behandlungsfläche erzeugt werden kann. Hierbei lassen sich die bereits erwähnten Vorteile erreichen.

Erfindungsgemäß wird vorgesehen, dass die Optik als diffraktives optisches Element ausgeführt ist. Hierdurch lassen sich vergleichsweise konstante Lichtintensitäten auf Behandlungsflächen beliebiger geometrischer Formen erzeugen.

Es ist möglich, dass das diffraktive optische Element eine Strahlaufweitung in eine rechteckige, insbesondere quadratische, Behandlungsfläche vornimmt. Auch eine Strahlaufweitung in eine ovale, insbesondere runde, Behandlungsfläche ist möglich. Die Vorteile dieser Arten von Behandlungsflächen bei der Herstellung von unterschiedlichen Bauteilquerschnitten ist bereits erläutert worden.

Wichtig für die Erfindung ist außerdem, dass der Strahlengang des Lasers wahlweise durch eines von mehreren diffraktiven optischen Elementen geführt werden kann, wobei durch jedes diffraktive optische Element eine Behandlungsfläche mit einer anderen Geometrie auswählbar ist. Eine solche Anlage kann beispielsweise dadurch realisiert werden, dass unterhalb des Lasers eine Art Bajonett oder Revolver mit unterschiedlichen diffraktiven Optiken vorgesehen wird, die sich jeweils in den Strahlengang des Lasers bringen lassen. Die diffraktiven Optiken können dann wahlweise beispielsweise eine quadratische Behandlungsfläche, eine runde Behandlungsfläche oder auch andere Behandlungsflächen schaffen.

Eine bevorzugte Ausführungsform der erfindungsgemäßen Anlage wird erhalten, wenn zusätzlich zu der diffraktiven Optik weitere optische Komponenten vorgesehen werden, mit der die Größe der Bearbeitungsfläche eingestellt werden kann, insbesondere in Kombination mit der Möglichkeit einer automatischen Wechselung von verschiedenen diffraktiven Optiken im Strahlengang.

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben. Es zeigen:
- Figur 1: die wesentlichen Elemente eines Ausführungsbeispiels der erfindungsgemäßen Anlage zum Laserschmelzen und
- Figur 2 und 3: Ausführungsbeispiele für das erfindungsgemäße Verfahren.

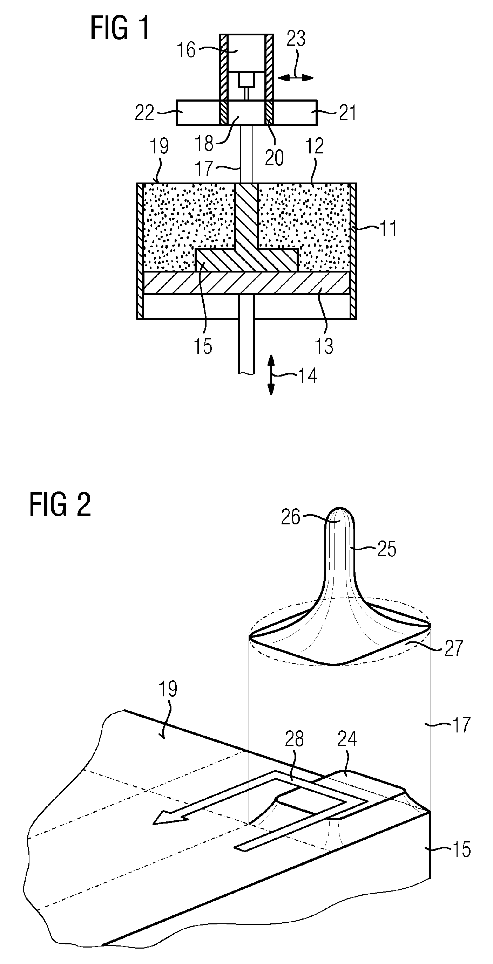

Eine Anlage zum selektiven Laserschmelzen gemäß Figur 1 ist nur in ihren für die Erfindung wesentlichen Bestandteilen dargestellt. Zu erkennen ist ein Behälter 11, in dem ein Pulverbett 12 aus Partikeln bevorratet werden kann. Der Behälter weist als Boden eine Bauplattform 13 auf, welcher in Richtung eines angegebenen Doppelpfeils 14 durch einen nicht dargestellten Antrieb gehoben und abgesenkt werden kann.

In dem Pulverbett 12 kann ein Bauteil 15 lagenweise hergestellt werden, indem ein Laser 16 einen Laserstrahl 17 erzeugt. Dieser wird durch eine Optik 18 geleitet, die in nicht näher dargestellter Weise ein refraktives optisches Element aufweist. Wie zu erkennen ist, wird durch die Optik der Laserstrahl aufgeweitet. Dieser führt an der Oberfläche 19 des Pulverbettes zum Aufschmelzen der Partikel, wodurch das Bauteil 15 lagenweise gebildet wird.

Die Optik 18 ist Teil eines Bajonetts 20, in dem auch eine Optik 21 und eine Optik 22 untergebracht sind. Mit Hilfe des Bajonetts können mit einem nicht dargestellten Antrieb die unterschiedlichen Optiken 18, 21, 22 ausgewechselt werden. Jede Optik erzeugt eine Strahlaufweitung mit einer anderen Charakteristik, so dass diese an den Anwendungsfall des aktuell herzustellenden Bauteils 15 angepasst werden kann. Der Laser 16 und die Optik 18 (bzw. 21, 22) können in Richtung des angedeuteten Doppelpfeils und senkrecht zur Zeichnungsebene bewegt werden, um die ganze Fläche des Pulverbettes 12 zu überstreichen, je nach dem, wie die Geometrie des herzustellenden Bauteils 15 ausgebildet ist.

In Figur 2 ist ein Verfahren zur Erzeugung eines rechtwinkligen Bauteils 15 dargestellt. Die Oberfläche 19 des Pulverbettes ist ausschnitthaft dargestellt. Weiterhin ist zu erkennen, dass der Laserstrahl 17 zu einer rechteckigen Behandlungsfläche 24 aufgeweitet wurde, wobei ein diffraktives optisches Element zum Einsatz kommt, welches über die Behandlungsfläche 24 ein weitgehend gleichmäßiges Intensitätsprofil erzeugt, welches durch ein flaches Plateau angedeutet ist. Zum Vergleich ist oberhalb der Behandlungsfläche 24 das Intensitätsprofil des Laserstrahls vor den Durchtritt durch das diffraktive optische Element dargestellt. Es zeigt sich eine glockenförmige Ausprägung des Intensitätsprofils 25 des Laserstrahls, wie dieses für Laserstrahlen charakteristisch ist. Dieses hat ein stark ausgeprägtes Maximum 26 und fällt dann schnell zu wesentlich geringeren Intensitätswerten nach außen ab. Die strichpunktierte runde Grundfläche 27 deutet an, dass dieses Intensitätsprofil 25 des Laserstrahls rotationssymmetrisch ausgebildet ist. Anders verhält es sich bei dem durch die refraktive Optik hergestellten Intensitätsprofil, welches die Behandlungsfläche 24 zur Verfügung stellt. Dieses hat einen quadratischen Grundriss.

Der quadratische Grundriss der Behandlungsfläche 24 führt zu einem Bewegungsmuster des Lasers 17, welcher durch den Pfeil 28 angedeutet ist. Die strichpunktierten Linien auf der Oberfläche 19 deuten an, in welchem Raster die Behandlungsfläche 24 über die Oberfläche geführt werden kann.

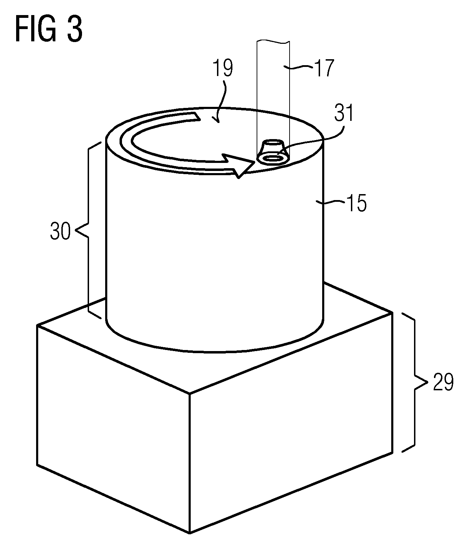

In Figur 3 ist die Herstellung eines anderen Bauteils 15 angedeutet. Es wird deutlich, dass dieses Bauteil verschiedene Regionen aufweist, wobei der untere Teil 29 vorteilhaft nach einem gemäß Figur 2 ausgebildeten Verfahren hergestellt werden kann. Der Teil 30, der zylindrisch ist, weist eine Querschnittsfläche ohne Ecken auf, so dass diese in der Oberfläche 19 des Pulverbettes vorteilhaft mit einer runden Behandlungsfläche 31 hergestellt werden kann. Auch hier kommt eine refraktive Optik zum Einsatz, die ein Intensitätsprofil mit einer weitgehenden konstanten Intensität innerhalb der Behandlungsfläche aufweist. Besonders vorteilhaft kann das Bauteil 15 gemäß Figur 3 mit einer Anlage gemäß Figur 1 hergestellt werden, in der ein Revolver 20 mit mehreren Optiken 21, 22, 18 vorgesehen ist.

## Patentansprüche

1. Verfahren zum Erzeugen eines Bauteils (15) durch selektives Laserschmelzen, bei dem ein Laserstrahl (17) auf den gerade zu erzeugenden Bereich des in Herstellung befindlichen Bauteils (15) gerichtet wird und dort lokal Partikel (12) des Bauteilwerkstoffes aufgeschmolzen werden, wobei der Laserstrahl (17) durch ein diffraktives optisches Element derart geformt, insbesondere aufgeweitet wird, dass sich eine Behandlungsfläche ergibt, die in zumindest einer Richtung quer zur Strahlpropagationsrichtung durch eine Vergleichmäßigung des Intensitätsprofils des Laserlichtes in dem gerade zu erzeugenden Bereich des in Herstellung befindlichen Bauteils gebildet ist,
**dadurch gekennzeichnet,**
**dass** mehrere wechselbare Optiken (18, 21, 22) verwendet werden, wobei mit dem diffraktiven optischen Element der einen Optik die Behandlungsfläche (24, 31) näherungsweise rechteckig, insbesondere quadratisch erzeugt wird und mit dem diffraktiven optischen Element einer anderen Optik die Behandlungsfläche oval, insbesondere rund erzeugt wird.

2. Verfahren nach Anspruch 1,
**dadurch gekennzeichnet,**
**dass** die Größe der Bearbeitungsfläche (24,31) durch weitere optische Komponenten im Strahlengang variabel eingestellt wird.

3. Verfahren nach einem der Ansprüche 1 oder 2,
**dadurch gekennzeichnet,**
**dass** die Intensität des Laserlichtes innerhalb der Behandlungsfläche (24, 31) von einem vorgegebenen Sollwert um weniger als 10 %, bevorzugt weniger als 5 % abweicht.

4. Anlage zum selektiven Laserschmelzen, aufweisend
• eine Bauplattform (13) für ein zu erzeugendes Werkstück,
• einen Laser (16), der sich auf die Bauplattform richten lässt,
wobei im Strahlengang des Lasers eine das Intensitätsprofil des Laserlichtes formende Optik (18) angeordnet ist, wobei eine durch das erzeugte Intensitätsprofil gebildete Behandlungsfläche, die in zumindest einer Richtung quer zur Strahlpropagationsrichtung durch eine Vergleichmäßigung des Intensitätsprofils des Laserlichtes in dem gerade zu erzeugenden Bereich des in Herstellung befindlichen Bauteils gebildet ist, im Bereich des auf der Bauplattform zu erzeugenden Bauteils liegt,
**dadurch gekennzeichnet,**
**dass** mehrere wechselbare Optiken (18, 21, 22) vorgesehen sind, wobei mit dem diffraktiven optischen Element der einen Optik eine Strahlformung in eine rechteckige, insbesondere quadratische Behandlungsfläche (24, 31) erfolgt und mit dem diffraktiven optischen Element einer anderen Optik eine Strahlformung in eine ovale, insbesondere runde Behandlungsfläche erfolgt.

## Claims

1. Process for producing a component (15) by selective laser melting, in which a laser beam (17) is directed onto that region of the component (15) being manufactured which is just to be produced and particles (12) of the component material are melted locally there, the laser beam (17) being shaped, in particular widened, by a diffractive optical element in such a way that a treatment surface is obtained which, in at least one direction transverse to the beam propagation direction, is formed by means of equalization of the intensity profile of the laser light in that region of the component being manufactured which is just to be produced,
**characterized in that**
multiple exchangeable optics (18, 21, 22) are used, the treatment surface (24, 31) being formed approximately rectangular, in particular square, with the diffractive optical element of one optics, and the treatment surface being formed oval, in particular round, with the diffractive optical element of another optics.

2. Process according to Claim 1, **characterized in that** the size of the processing surface (24, 31) is set variably by means of further optical components in the beam path.

3. Process according to either of Claims 1 and 2, **characterized in that** the intensity of the laser light within the treatment surface (24, 31) deviates from a stipulated desired value by less than 10%, preferably by less than 5%.

4. System for selective laser melting, having
• a construction platform (13) for a workpiece to be produced,
• a laser (16) which can be directed onto the construction platform,
optics (18) which shape the intensity profile of the laser light being arranged in the beam path of the laser, a treatment surface formed by means of the intensity profile generated lying in the region of the component to be produced on the construction platform, which treatment surface, in at least one direction transverse to the beam propagation direction, is formed by means of equalization of the intensity profile of the laser light in that region of the component being manufactured which is just to be produced,
**characterized in that**
multiple exchangeable optics (18, 21, 22) are provided, the diffractive optical element of one optics shaping the beam into a rectangular, in particular square, treatment surface (24, 31), and the diffractive optical element of another optics shaping the beam into an oval, in particular round, treatment surface.

## Revendications

1. Procédé de production d'une pièce (15) par fusion laser sélective, dans lequel on dirige un faisceau (17) laser sur la région à traiter précisément de la pièce (15) se trouvant en fabrication et on y fait fondre localement des particules (12) du matériau de la pièce, le faisceau (17) laser étant déformé, notamment élargi, par un élément optique de diffraction de manière à donner une surface de traitement qui, dans au moins une direction tranversalement à la direction de propagation du faisceau, est formée par une uniformisation du profil d'intensité de la lumière laser dans la partie à traiter précisément de la pièce se trouvant en fabrication, **caractérisé en ce que**
on utilise plusieurs optiques (18, 21, 22) interchangeables en produisant, par l'élément optique de diffraction de l'une des optiques, la surface (24, 31) de traitement à peu près rectangulaire, notamment carrée, et par l'élément optique de diffraction d'une autre optique, la surface de traitement ovale, notamment circulaire.

2. Procédé suivant la revendication 1,
**caractérisé en ce que**
on règle la dimension de la surface (24, 31) de traitement de manière variable par d'autres éléments optiques dans le trajet du faisceau.

3. Procédé suivant l'une des revendications 1 ou 2,
**caractérisé en ce que**
l'intensité de la lumière laser dans la surface (24, 31) de traitement s'écarte d'une valeur de consigne donnée à l'avance de moins de 10%, de préférence de moins de 5%.

4. Installation de fusion laser sélective comportant :
• une plateforme (13) de construction pour une pièce à produire,
• un laser (16) qui peut être dirigé sur la plateforme de construction,
dans laquelle une optique (18) formant le profil d'intensité de la lumière laser est montée dans le trajet de faisceau du laser, une surface de traitement formée par le profil d'intensité produit, qui est formée dans au moins dans une direction transversalement à la direction de propagation du faisceau par une uniformisation du profil d'intensité de la lumière laser dans la région à traiter précisément de la pièce se trouvant en fabrication, se trouvant dans la région de la pièce à produire sur la plateforme de construction, **caractérisée en ce que**
plusieurs optiques (18, 21, 22) interchangeables sont prévues, une forme du faisceau donnant par l'élément optique de diffraction de l'une des optiques, une surface (24, 31) de traitement rectangulaire, notamment carrée, et par l'élément optique de diffraction d'une autre optique, une surface de traitement ovale, notamment circulaire.
